# EUROPÄISCHE PATENTSCHRIFT

(11) **EP 2 225 929 B1**
(45) Veröffentlichungstag und Bekanntmachung des Hinweises auf die Patenterteilung: **02.01.2013**
(21) Anmeldenummer: 10000683.2
(22) Anmeldetag: 25.01.2010
(51) Int. Cl.: A01D 41/12, A01D 80/02

(54) **Gutverteileinrichtung für Mähdrescher**
Straw spreader for a combine harvester
Dispositif de distribution de paille pour moissonneuse-batteuse

(30) Priorität: 03.03.2009 DE 102009011094
(43) Veröffentlichungstag der Anmeldung: 08.09.2010
(73) Patentinhaber: CLAAS Selbstfahrende Erntemaschinen GmbH, 33428 Harsewinkel (DE)
(72) Erfinder: Roberg, Alfons, 33428 Harsewinkel (DE)

(56) Entgegenhaltungen:
- EP-A1- 1 219 164
- EP-A1- 1 277 387
- EP-A1- 1 328 145
- EP-A2- 1 929 857
- DE-A1- 3 319 138
- US-A1- 2003 109 293
- US-A1- 2007 026 912
- US-B2- 7 331 855

## Beschreibung

Die Erfindung betrifft eine Gutverteileinrichtung für Mähdrescher nach dem Oberbegriff des Anspruchs 1.

Derartige Gutverteileinrichtungen haben die Aufgabe, dass aus dem Mähdrescher herausgeförderte Erntegut entweder breit auf dem Boden zu verteilen oder in einem Schwad auf dem Boden abzulegen. In der EP 1 328 145 wird eine als Streublechverteiler ausgeführte Gutverteileinrichtung offenbart, die im rückwärtigen Bereich eines zur Strohzerkleinerung eingesetzten Strohhäckslers positioniert ist. Damit auch die aus der Reinigungseinrichtung des Mähdreschers abgeschiedenen Nichtkornbestandteile über den Streublechverteiler auf dem Boden breitverteilt werden können, arbeitet der Streublechverteiler zudem mit in seinem rückwärtigen Bereich angeordneten Wurfgebläsen zusammen. Je nach Positionierung der Wurfgebläse wird der Streublechverteiler mit aus dem Strohhäcksler austretenden gehäckselten Stroh und/oder aus der Reinigungseinrichtung abgeschiedenen Nichtkornbestandteilen beschickt. Über die in den Streublechverteiler integrierten Leitbleche werden die verschiedenen Gutströme schließlich auf dem Feldboden verteilt. In Abhängigkeit von der Krümmung der Leitbleche wird schließlich eine bestimmte Verteilbreite auf dem Feldboden erzielt. Aufgrund dessen, dass die Leitbleche in der Auswurfhaube fixiert sind haben sie ausschließlich die Funktion den Gutstrom in Teilgutströme aufzuteilen und zur abgabeseitigen Austrittsöffnung zu führen, sodass die erreichbare Verteilbreite im wesentlichen von der dem Gutstrom im Strohhäcksler und den Wurfgebläsen zugeführten kinetischen Energie und der Intensität der Krümmung der Leitbleche abhängt. Aufgrund der an den Leitblechen und der Auswurfhaube auftretenden Reibung geht ein beachtlicher Anteil der dem Gutstrom aufgeprägten kinetischen Energie verloren, was letztlich dazu führt, dass derartige System in der Regel nicht in der Lage sind große Verteilbreiten zu realisieren.

Zur Überwindung dieses Nachteils wird u.a. in der US 7,331,855 eine Spreuverteileinrichtung vorgeschlagen, die an Stelle von in der Auswurfhaube angeordneten Streublechen über rotierende Verteileinrichtungen verfügt. Die rotierenden Verteileinrichtungen nehmen eine Vielzahl von gekrümmten Verteilelementen auf, die den aus dem Strohhäcksler geförderten Gutstrom übernehmen, beschleunigen und in Abhängigkeit von den wirkenden Fliehkräften abgabeseitig auf dem Feldboden breit verteilen. Derartige Systeme haben jedoch wegen der fliehkraftbedingten Gutabgabe den Nachteil, dass sie an jedem Punkt der Abgabeöffnung stets annähernd dieselbe Menge Erntegut abgeben. Dies führt dazu, dass das Erntegut über die Verteilbreite ungleichmäßig auf dem Feldboden abgelegt wird, da die in den Außenbereichen abgegebenen Gutmengen über eine erheblich größere Fläche verteilt werden als die in den inneren Bereichen aus der Verteileinrichtung austretenden Erntegutmengen. Diese Ungleichverteilung des Erntegutes auf dem Feldboden wird auch dadurch noch intensiviert, dass bei zwei nebeneinander angeordneten rotierenden Verteileinrichtungen die mittleren Bereiche des Feldbodens von beiden Verteileinrichtungen mit Erntegut beaufschlagt werden.

Aus der US 2007/0026912 A1 ist eine Gutverteileinrichtung für Mähdrescher gemäß dem Oberbegriff des Anspruches 1 bekannt, bei dem die Gutverteileinrichtung für Mähdrescher mit zumindest einer innenseitig mit Gutleitelementen bestückten Auswurfhaube ausgerüstet ist und die Gutverteileinrichtung in ihrem rückwärtigen Bereich mit einem Erntegutstrom beschickt wird, der wahlweise oder zugleich aus einem Strohhäcksler oder einer Reinigungseinrichtung abgegeben wird und die Gutleitelemente als eine Kombination aus stationären Leitblechen und rotierende Wurfgebläsen ausgebildet sind.

Es ist deshalb Aufgabe der Erfindung die beschriebenen Nachteile des Standes der Technik zu vermeiden und insbesondere eine Gutverteileinrichtung für Mähdrescher vorzuschlagen, die neben einer großen Verteilbreite eine homogenere Gutverteilung auf dem Feldboden ermöglicht.

Diese Aufgabe wird erfindungsgemäß durch die kennzeichnenden Merkmale des Anspruchs 1 gelöst.

Indem die Gutverteileinrichtung für Mähdrescher mit zumindest einer innenseitig mit Gutleitelementen bestückten Auswurfhaube ausgerüstet ist und die Gutverteileinrichtung in ihrem rückwärtigen Bereich mit einem Erntegutstrom beschickt wird, der wahlweise oder zugleich aus einem Strohhäcksler oder einer Reinigungseinrichtung abgegeben wird und die Gutleitelemente als eine Kombination aus stationären Leitblechen und rotierende Wurfgebläsen ausgebildet sind, wobei jedes Wurfgebläses eine Vielzahl von Läufern aufnimmt und jeder Läufer in vertikaler Richtung eine Vielzahl von Förderelementen trägt und wobei die Position der Förderelemente zum Wurfgebläse einstellbar ist, wird sichergestellt, dass die Verteileinrichtung einerseits große Verteilbreiten realisieren kann und zudem über die Verteilbreite eine homogene Gutverteilung möglich wird.

In einer vorteilhaften Ausgestaltung der Erfindung sind die Leitbleche in einem mittleren Bereich der Ausfallhaube zueinander benachbart angeordnet, wobei äußeren, im rechts- und linksseitigen Außenbereich der Ausfallhaube angeordneten Leitblechen jeweils zumindest ein rotierendes Wurfgebläse zugeordnet ist. Eine derartige Anordnung hat insbesondere den Vorteil, dass dem weit nach außen zu fördernden Gutstrom zusätzliche kinetische Energie aufgeprägt wird, sodass auch große Verteilbreiten sicher umsetzbar sind.

Zur Gewährleistung einer annähernd identischen rechts- und linksseitigen Verteilung des Erntegutes auf dem Feldboden sowie der dafür erforderlichen homogenen Führung des Erntegutes in der Verteileinrichtung ist in einer weiteren vorteilhaften Ausgestaltung vorgesehen, dass die Leitbleche in links- und rechtsseitig der Mitte der Auswurfhaube angeordnete Leitblechpakete unterteilt sind.

Damit auch im mittleren Bereich der Verteilbreite, in dem die Gutverteilung durch die Leitelemente bewirkt wird eine homogene Erntegutverteilung sichergestellt wird, ist in einer vorteilhaften Weiterbildung der Erfindung vorgesehen, dass die Krümmung der Leitbleche eines Leitblechpakets von Innen nach Außen zunimmt, sodass der Querfördereffekt allmählich zunimmt.

Um die Verteilung des Erntegutes auf dem Feldboden besser an die Erntegutparameter und die zu erzielenden Verteilbreiten anpassen zu können, ist in einer vorteilhaften Ausgestaltung der Erfindung vorgesehen, dass die Position jedes der Leitbleche eines Leitblechpakets oder aller Leitbleche eines Leitblechpakets gemeinschaftlich gegenüber der Ausfallhaube einstellbar sind.

Damit die Wurfgebläse das von ihnen geförderte Erntegut sicher aus der Verteileinrichtung austragen ist ferner vorgesehen, dass jedes der Wurfgebläse von einem äußeren Leitbleche zumindest teilweise ummantelt wird.

Eine konstruktiv einfach aufgebaute und besonders flexible Anpassung an unterschiedliche Verteilbreiten ergibt sich dann, wenn in einer vorteilhaften Ausgestaltung der Erfindung jedes der äußeren Leitbleche zumindest zweiteilig ausgeführt ist, wobei ein erstes Segment jedes äußeren Leitblechs an der Auswurfhaube fixiert ist, während ein abgabeseitig angeordnetes zweites Segment der äußeren Leitbleche schwenkbeweglich mit dem jeweils ersten Segment gekoppelt ist.

Eine besonders intensive Gutmitnahme durch die Wurfgebläse wird in einer vorteilhaften Weiterbildung der Erfindung dann erreicht, wenn die Förderelemente jedes Wurfgebläses als Zinken ausgebildet sind.

Eine effiziente Gestaltung des Antriebs der Wurfgebläse ergibt sich dann, wenn die Wurfgebläse von separaten Antrieben oder mittels gemeinsamen Antriebs angetrieben werden und dass der oder die Antriebe als Keilriemenantrieb, Kegelradstufenantrieb oder Hydroantrieb ausgebildet sind.

Damit Gutstauungen in der Gutverteileinrichtung weitgehend ausgeschlossen werden, ist in einer weiteren vorteilhaften Ausgestaltung der Erfindung vorgesehen, dass jeder der Zinken mit dem jeweiligen Läufer mittels Schraubverbindung gekoppelt ist und dass jede der Schraubverbindungen eine Abdeckung umfasst.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Seitenansicht eines Mähdreschers mit erfindungsgemäßer Gutverteileinrichtung
- Figur 2: eine schematische Ansicht von unten auf die erfindungsgemäße Gutverteileinrichtung
- Figur 3: eine schematische Ansicht von hinten auf die erfindugsgemäße Gutverteileinrichtung
- Figur 4: eine schematische Darstellung der Zinkenschnellverstellung

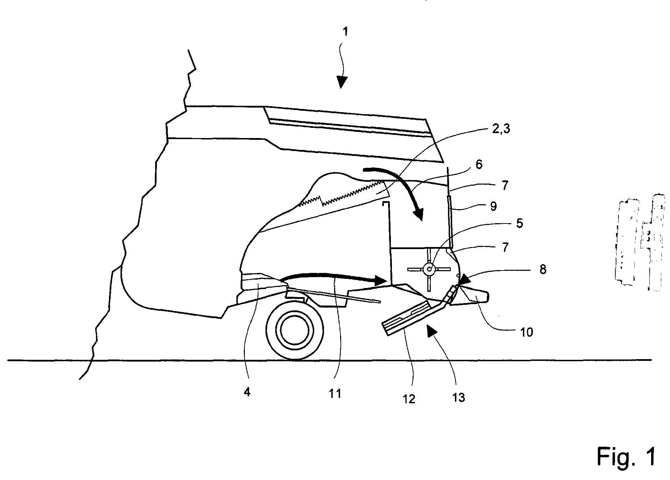

Figur 1 zeigt schematisch einen an sich bekannten und deshalb nicht detailliert beschrieben Mähdrescher 1, der unter anderem eine als Hordenschüttler 2 ausgeführte Trenneinrichtung 3 und eine Reinigungseinrichtung 4 umfasst. Im rückwärtigen Bereich der Trenneinrichtung 2 und unterhalb dieser nimmt der Mähdrescher 1 einen Strohhäcksler 5 auf, der obenseitig mit dem die Trenneinrichtung 2 verlassenden, im wesentlichen aus Stroh bestehenden Gutstrom 6 beschickt werden kann. Der Strohhäcksler 5 wird von einem Gehäuse 7 mit einer untenseitigen Auslassöffnung 8 ummantelt. Je nach Ausführung des Mähdreschers 1 kann dem Strohhäcksler 5 obenseitig eine verschwenkbare Zugangsklappe 9 zugeordnet sein, die den Zugang zum Strohhäcksler 5 zwecks Ablage des ungehäckselten Strohs 6 in einem Schwad verschließen kann. Im Bereich der Auslassöffnung 8 ist dem Strohhäcksler 5 die erfindungsgemäße und noch näher zu beschreibende Gutverteileinrichtung 10 zugeordnet. Die im rückwärtigen Bereich der Reinigungseinrichtung 4 aus dieser austretenden Nichtkornbestandteile 11 gelangen entweder unmittelbar in die erfindungsgemäße Gutverteileinrichtung 10 oder können unter Verwendung eines ein oder mehrere rotierende Verteiler 12 umfassenden Wurfgebläses 13 entweder dem Strohhäcksler 5 oder der erfindungsgemäßen Gutverteileinrichtung 10 direkt zugeführt werden. Denkbar ist auch, dass das Wurfgebläse 13 die Nichtkornbestandteile 11 unter Umgehung des Strohhäckslers 5 sowie der Gutverteileinrichtung 10 seitlich aus dem Mähdrescher 1 herausfördert.

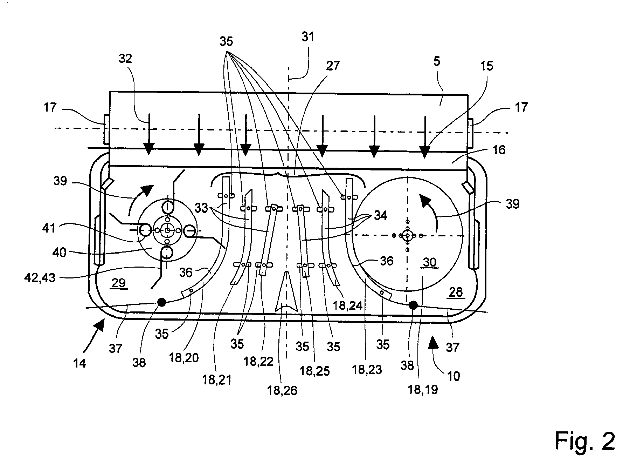

Figur 2 zeigt eine schematische Ansicht von unten auf die erfindungsgemäße Gutverteileinrichtung 10. Die Gutverteileinrichtung 10 umfasst eine Auswurfhaube 14, die über eine dem Strohhäcksler 5 zugewandte Einlassöffnung 15 verfügt. Im Bereich der Einlassöffnung 15 ist die Auswurfhaube 14 durch eine Rahmenkonstruktion 16 verstärkt, über deren rechts- und linksseitig angeformten Flansche 17 die Gutverteileinrichtung 10 am Mähdrescher 1 fixiert ist. In erfindungsgemäßer Weise nimmt die Auswurfhaube 14 eine Vielzahl von Gutleitelementen 18 auf, wobei die Gutleitelemente 18 eine Kombination aus stationären Leitblechen 20-26 und rotierenden Wurfgebläsen 19 bilden. In erfindungsgemäßer Weise sind die stationären Leitbleche 20-26 der Auswurfhaube 14 in einem mittleren Bereich 27 zugeordnet, wobei jeweils den äußeren Leitblechen 20, 23 im rechts- und linksseitigen Außenbereich 28, 29 der Ausfallhaube 14 ein Wurfgebläse 19 benachbart zugeordnet ist. Aus Sichtbarkeitsgründen wurde in dem linksseitig dargestellten Wurfgebläse 19 die untenseitige Bodenplatte 30 dieses Wurfgebläses 19 nicht eingezeichnet. Im dargestellten Ausführungsbeispiel ist das in der Mitte 31 der Ausfallhaube 14 angeordnete Leitelement 26 so beschaffen, dass es den in diesem Bereich auftreffenden Teil des Erntegutstromes 32 nach rechts oder links ablenkt.

Die rechts und links der Mitte 31 der Ausfallhaube 14 angeordneten Leitbleche 20-22; 23-25 sind jeweils zu Leitblechpaketen 33, 34 zusammengefasst. Damit eine zunehmend intensivere seitliche Verteilung des in die Gutverteileinrichtung 10 eintretenden Erntegutstromes 32 auch in dem mittleren Bereich 27 der Ausfallhaube 14 sichergestellt wird, nimmt die Krümmung der Leitbleche 20-22; 23-25 jedes Leitblechpakets 33, 34 von Innen, der Mitte 31 der Ausfallhaube 14, nach Außen, den Außenbereichen 28, 29 der Ausfallhaube 14 zu. Zudem sind zumindest die Leitbleche 20-22; 23-25 der Leitblechpakte 33, 34 jeweils in ihrem frontseitigen und rückwärtigen Bereich in Schiebführungen 35 gelagert, sodass jedes Leitblech 20-22; 23-25 separat oder jeweils die Leitbleche 20-22; 23-25 eines Leitblechpakets 33, 34 ihre Position zur Ausfallhaube 14 ändern können. Die jeweils äußeren Leitbleche 20, 24 sind zudem so beschaffen, dass sie das ihnen jeweils benachbarte Wurfgebläse 19 zumindest teilweise ummanteln, sodass die von den Wurfgebläsen 19 geförderten Erntegutströme 32 nicht bereits im Bereich der Ausfallhaube 14 wieder aus den Wurfgebläsen 19 austreten können. Weiter kann jedes der äußeren Leitbleche 20, 24 zweiteilig ausgeführt sein, wobei jeweils ein erstes Segment 36 jedes äußeren Leitblechs 20, 24 an der Auswurfhaube 14 fixiert ist während ein abgabeseitig angeordnetes zweites Segment 37 der äußeren Leitbleche 20, 24 über ein Drehgelenk 38 schwenkbeweglich mit dem jeweils ersten Segment 36 gekoppelt ist.

Im dargestellten Ausführungsbeispiel verfügt jedes Wurfgebläse 19 über eine gemäß Pfeilrichtung 39 rotativ antreibbare Flanschplatte 40, die hier vier sogenannte Läufer 41 aufnimmt, an denen in noch näher zu beschreibender Weise die als Zinken 43 ausgeführten Förderelemente 42 jedes Wurfgebläses 19 befestigt sind, wobei die Zinken 43 abweichend von der dargestellten Form jede beliebige gekrümmte oder gerade Form aufweisen können.

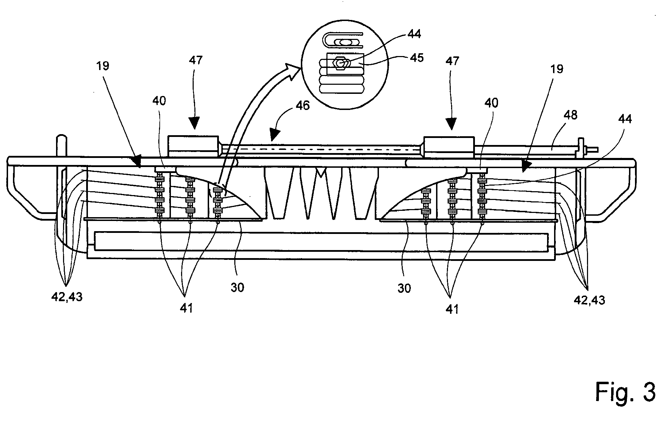

Gemäß Figur 3 sind die Läufer 41 jeweils mit der rotativ angetriebenen Flanschplatte 40 und der Bodenplatte 30 verschraubt. Jedem Läufer 41 sind in dem beschriebenen Ausführungsbeispiel jeweils vier als Zinken 43 ausgeführte Förderelemente 42 vertikal übereinander und zueinander beabstandet zugeordnet. Jeder Zinken 43 ist mittels einer Schraubverbindung 44 mit dem jeweiligen Läufer 41 verbunden, wobei zur Vermeidung von Gutstau jede Schraubverbindung 44 mittels einer Abdeckung 45 verkleidet sein kann. Es liegt zudem im Rahmen der Erfindung, dass jedes Wurfgebläse 19 über mehr oder weniger als die im Ausführungsbeispiel dargestellten vier Läufer 41 und die jeweils vier Zinken 43 je Läufer 41 verfügt. Im dargestellten Ausführungsbeispiel werden die Wurfgebläse 19 über einen gemeinsamen Antriebsstrang 46 angetrieben, wobei jedes Wurfgebläse 19 über eine Kegelradstufe 47 mit der Antriebswelle 48 des Antriebsstrangs 46 gekoppelt ist. Es liegt im Rahmen der Erfindung, dass jedes Wurfgebläse 19 auch über separate Hydromotoren angetrieben wird oder beide Wurfgebläse 19 gemeinschaftlich über einen überkreuz laufenden Keilriemen miteinander gekoppelt sind.

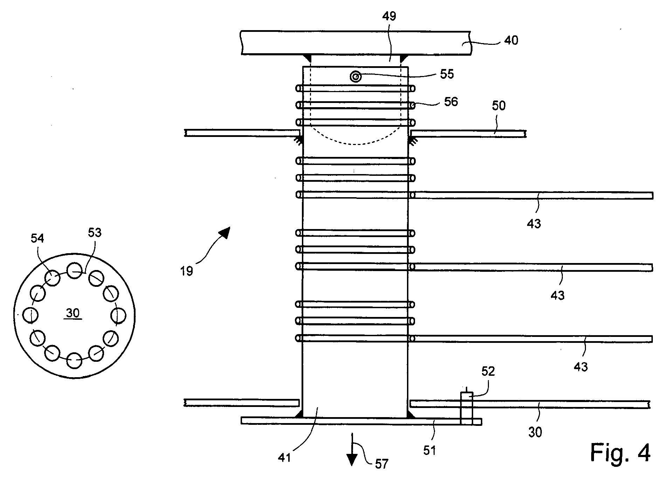

Um eine optimale Gutverteilung auf dem Boden und eine einfache Wurfweitenanpassung zu erreichen, können die Zinken 43 jedes Wurfgebläses 19 zudem in ihrer Position einstellbar ausgeführt sein. Eine konstruktiv einfach aufgebaute Einstellung der Zinkenlage ist in Figur 4 dargestellt. Zur Führung jedes Läufers 41 sind der obenseitigen Flanschplatte 40 jedes Wurfgebläses 19 Führungsbuchsen 49 drehfest zugeordnet. Jede Führungsbuchse 49 durchsetzt den rohrförmig ausgebildeten Läufer 41 zumindest teilweise, sodass jeder Läufer 41 freidrehbar von der jeweiligen Führungsbuchse 49 geführt wird. An seinem obenseitige Ende durchsetzt jeder Läufer 41 das obenseitige Deckblech 50 des jeweiligen Wurfgebläses 19. Das gegenüberliegende Ende jedes Läufers 41 ist mit einer Grundplatte 51 verschweißt, die läuferseitig über einen drehfest mit ihr verbundenen Arretierstift 52 verfügt. Damit jeder Läufer 41 in einer definierten Position in dem jeweiligen Wurfgebläse 19 positioniert werden kann, wird die Bodenplatte 30 jedes Wurfgebläses 19 im Bereich der Läufer 41 jeweils durch auf einem gemeinsamen Umfangskreis 53 liegende Bohrungen 54 durchsetzt. Indem nun jedem Läufer 41 zwischen dem Deckblech 50 und der Flanschplatte 40 des jeweiligen Wurfgebläses 19 eine zwischen einem Anschlagelement 55 und dem Deckblech 50 eingespannte Druckfeder 56 zugeordnet ist, wird ein konstruktiv einfacher Mechanismus zur Lageänderung der Zinken 43 in dem jeweiligen Wurfgebläse 19 geschaffen. Das Rückdehnungsbestreben der Druckfeder 56 bewirkt, dass der Arretierstift 52 jedes Läufers 41 in eine mit seiner Position korrespondierende Bohrung 54 gezogen und in dieser gehalten wird. Soll die Lage der Zinken 43 eines Läufers 41 geändert werden, muss der Läufer 41 gegen die Wirkung der Druckfeder 56 gemäß Pfeilrichtung 57 soweit aus dem Wurfgebläse 19 herausbewegt werden, dass die entsprechende Bohrung 54 den Arretierstift 52 freigibt. Im nächsten Schritt kann der Läufer 41 in eine mit der gewünschten neuen Zinkenposition korrespondierende Lage auf der Führungsbuchse 49 verdreht werden. Indem in dieser neuen Position der Arretierstift 52 wieder mit einer Bohrung 54 fluchtend ausgerichtet und der Läufer 41 freigegeben wird rastet der Arretierstift 52 durch das Rückdehnungsbestreben der Druckfeder 55 in der jeweiligen Bohrung 54 ein. Auf diese Weise wird es möglich, die Zinken jedes Läufers 41 in beliebig vielen Positionen in dem jeweiligen Wurfgeblöse 19 anzuordnen, wobei die Zahl der möglichen Positionen der Zahl der auf dem gemeinsamen Umfangskreis 53 liegenden Bohrungen 54 entspricht.

### Bezugszeichenliste:

- 1: Mähdrescher
- 2: Hordenschüttler
- 3: Trenneinrichtung
- 4: Reinigungseinrichtung
- 5: Strohhäcksler
- 6: Gutstrom
- 7: Gehäuse
- 8: Auslassöffnung
- 9: Zugangsklappe
- 10: Gutverteileinrichtung
- 11: Nichtkornbestandteile
- 12: rotierender Verteiler
- 13: Wurfgebläse
- 14: Ausfallhaube
- 15: Einlassöffnung
- 16: Rahmenkonstruktion
- 17: Flansch
- 18: Gutleitelement
- 19: Wurfgebläse
- 20-26: stationäre Leitbleche
- 27: mittlere Bereich
- 28: Außenbereich
- 29: Außenbereich
- 30: Bodenplatte
- 31: Mitte der Ausfallhaube
- 32: Erntegutstrom
- 33: Leitblechpaket
- 34: Leitblechpaket
- 35: Schiebeführung
- 36: erstes Segment
- 37: zweites Segment
- 38: Drehgelenk
- 39: Pfeilrichtung
- 40: Flanschplatte
- 41: Läufer
- 42: Förderelement
- 43: Zinken
- 44: Schraubverbindung
- 45: Abdeckung
- 46: Antriebsstrang
- 47: Kegelradstufe
- 48: Antriebswelle
- 49: Führungsbuchse
- 50: Deckblech
- 51: Grundplatte
- 52: Arretierstift
- 53: Umfangskreis
- 54: Bohrung
- 55: Anschlagelement
- 56: Druckfeder

## Patentansprüche

1. Gutverteileinrichtung für Mähdrescher mit zumindest einer innenseitig mit Gutleitelementen bestückten Auswurfhaube, wobei die Gutverteileinrichtung in ihrem rückwärtigen Bereich mit einem Erntegutstrom beschickt wird, der wahlweise oder zugleich aus einem Strohhäcksler oder einer Reinigungseinrichtung abgegeben wird, und die Gutleitelemente (18) als eine Kombination aus stationären Leitblechen (20-26) und rotierenden Wurfgebläsen (19) ausgebildet sind,
**dadurch gekennzeichnet,**
**dass** jedes Wurfgebläse (19) eine Vielzahl von Läufern (41) aufnimmt und jeder Läufer (41) in vertikaler Richtung eine Vielzahl von Förderelementen (42) trägt und wobei die Position der Förderelemente (42) zum Wurfgebläse (19) einstellbar ist.

2. Gutverteileinrichtung für Mähdrescher nach Anspruch 1,
**dadurch gekennzeichnet,**
**dass** die Leitbleche (20-26) in einem mittleren Bereich (27) der Ausfallhaube (14) zueinander benachbart angeordnet sind, wobei äußeren, im rechts- und linksseitigen Außenbereich (28, 29) der Ausfallhaube (14) angeordneten Leitblechen (20, 23) jeweils zumindest ein rotierendes Wurfgebläse (19) zugeordnet ist.

3. Gutverteileinrichtung für Mähdrescher nach einem der vorhergehenden Ansprüche,
**dadurch gekennzeichnet,**
**dass** die Leitbleche (20-22; 23-25) in links- und rechtsseitig der Mitte (31) der Auswurfhaube (14) angeordnete Leitblechpakete (33, 34) unterteilt sind.

4. Gutverteileinrichtung für Mähdrescher nach Anspruch 3,
**dadurch gekennzeichnet,**
**dass** die Krümmung der Leitbleche (20-22; 23-25) eines Leitblechpakets (33, 34) von Innen nach Außen zunimmt.

5. Gutverteileinrichtung für Mähdrescher nach zumindest einem der Ansprüche 3 und 4,
**dadurch gekennzeichnet,**
**dass** die Position jedes der Leitbleche (20-22; 23-25) eines Leitblechpakets (33, 34) oder alle Leitbleche (20-22; 23-25) eines Leitblechpakets (33, 34) gemeinschaftlich gegenüber der Ausfallhaube (14) einstellbar sind.

6. Gutverteileinrichtung für Mähdrescher nach einem der vorhergehenden Ansprüche,
**dadurch gekennzeichnet,**
**dass** jedes der Wurfgebläse (19) von einem äußeren Leitblech (20, 23) zumindest teilweise ummantelt wird.

7. Gutverteileinrichtung für Mähdrescher nach Anspruch 6,
**dadurch gekennzeichnet,**
**dass** jedes der äußeren Leitbleche (20, 23) zumindest zweiteilig ausgeführt ist, wobei ein erstes Segment (36) jedes äußeren Leitblechs (20, 23) an der Auswurfhaube (14) fixiert ist während ein abgabeseitig angeordnetes zweites Segment (37) der äußeren Leitbleche (20, 23) schwenkbeweglich mit dem jeweils ersten Segment (36) gekoppelt ist.

8. Gutverteileinrichtung für Mähdrescher nach einem der vorhergehenden Ansprüche,
**dadurch gekennzeichnet,**
**dass** die Förderelemente (42) jedes Wurfgebläses (19) als Zinken (43) ausgebildet sind.

9. Gutverteileinrichtung für Mähdrescher nach einem der vorhergehenden Ansprüche,
**dadurch gekennzeichnet,**
**dass** die Wurfgebläse (19) von separaten Antrieben oder mittels eines gemeinsamen Antriebs angetrieben werden und dass der oder die Antriebe als Keilriemenantrieb, Kegelradstufenantrieb (47) oder Hydroantrieb ausgebildet sind.

10. Gutverteileinrichtung für Mähdrescher nach Anspruch 8,
**dadurch gekennzeichnet,**
**dass** jeder der Zinken (43) mit dem jeweiligen Läufer (41) mittels Schraubverbindung (44) gekoppelt ist und dass jede der Schraubverbindungen (44) eine Abdeckung (45) umfasst.

## Claims

1. A material distribution apparatus for combine harvesters comprising at least one ejection hood fitted on the inside with material guide elements, wherein the material distribution apparatus is loaded in its rearward region with a flow of crop material which is delivered selectively or at the same time from a straw chopper or a cleaning device and the material guide elements (18) are in the form of a combination of stationary guide plates (20-26) and rotating projection blowers (19),
**characterised in that** each projection blower (19) accommodates a plurality of rotors (41) and each rotor (41) carries a plurality of conveyor elements (42) in a vertical direction and wherein the position of the conveyor elements (42) is adjustable relative to the projection blower (19).

2. A material distribution apparatus for combine harvesters according to claim 1 **characterised in that** the guide plates (20-26) are arranged in mutually adjacent relationship in a central region (27) of the discharge hood (14), wherein at least one respective rotating projection blower (19) is associated with outer guide plates (20, 23) arranged in the right-hand and left-hand outer region (28, 29) of the discharge hood (14).

3. A material distribution apparatus for combine harvesters according to one of the preceding claims **characterised in that** the guide plates (20-22; 23-25) are subdivided into guide plate arrays (33, 34) arranged at the left and the right of the centre (31) of the ejection hood (14).

4. A material distribution apparatus for combine harvesters according to claim 3 **characterised in that** the curvature of the guide plates (20-22; 23-25) of a guide plate array (33, 34) increases from the inside outwardly.

5. A material distribution apparatus for combine harvesters according to at least one of claims 3 and 4 **characterised in that** the position of each of the guide plates (20-22; 23-25) of a guide plate array (33, 34) or all guide plates (20-22; 23-25) of a guide plate array (33, 34) are adjustable jointly with respect to the ejection hood (14).

6. A material distribution apparatus for combine harvesters according to one of the preceding claims **characterised in that** each of the projection blowers (9) is at least partially encased by an outer guide plate (20, 23).

7. A material distribution apparatus for combine harvesters according to claim 6 **characterised in that** each of the outer guide plates (20, 23) is of an at least two-part configuration, wherein a first segment (36) of each outer guide plate (20, 23) is fixed to the ejection hood (14) while a second segment (37) of the outer guide plates (20, 23), that is arranged at the discharge side, is pivotably movably coupled to the respective first segment (36).

8. A material distribution apparatus for combine harvesters according to one of the preceding claims **characterised in that** the conveyor elements (42) of each projection blower (19) are in the form of tines (43).

9. A material distribution apparatus for combine harvesters according to one of the preceding claims **characterised in that** the projection blowers (19) are driven by separate drives or by means of a common drive and the drive or drives is or are in the form of a V-belt drive, a bevel gear step drive (47) or a hydraulic drive.

10. A material distribution apparatus for combine harvesters according to claim 8 **characterised in that** each of the tines (43) is coupled to the respective rotor (41) by means of a screw connection (44) and each of the screw connections (44) includes a cover (45).

## Revendications

1. Dispositif de distribution de paille pour moissonneuse-batteuse comportant au moins un capot d'éjection équipé d'éléments conducteurs de paille, sachant que le dispositif de distribution de paille est chargé dans sa zone arrière d'un flux de produit récolté, qui est délivré au choix ou simultanément depuis une hacheuse de paille ou depuis un dispositif de nettoyage et sachant que les éléments conducteurs de paille (18) sont configurés sous la forme d'une combinaison constituée de tôles conductrices (20 - 26) stationnaires et de soufflerie de décharge (19) en rotation,
**caractérisé en ce**
**que** chaque soufflerie de décharge (19) reçoit une pluralité de rotors (41), et en ce que chaque rotor (41) supporte dans la direction verticale une pluralité d'éléments de convoyage (42), sachant que la position des éléments de convoyage (42) peut être réglée par rapport à la soufflerie de décharge (19).

2. Dispositif de distribution de paille pour une moissonneuse-batteuse selon la revendication 1,
**caractérisé en ce**
**que** les tôles conductrices (20 - 26) sont disposées de manière adjacente les unes par rapport aux autres dans une zone centrale (27) du capot défaillant (14), sachant que respectivement au moins une soufflerie de décharge (19) est associée aux tôles conductrices (20, 23) extérieures disposées dans la zone extérieure côté gauche et côté droit du capot défaillant (14)

3. Dispositif de distribution de paille pour une moissonneuse-batteuse selon l'une quelconque des revendications précédentes,
**caractérisé en ce**
**que** les tôles conductrices -20 - 22 ; 23 - 25) sont divisées en paquets de tôles conductrices (33, 34) disposés côté droit et côté gauche du centre (31) du capot d'éjection (14).

4. Dispositif de distribution de paille selon la revendication 3,
**caractérisé en ce**
**que** la courbure des tôles conductrices ( 20 - 22 ; 23 - 25) d'un paquet de tôles conductrices (33, 34) augmente de l'intérieur vers l'extérieur.

5. Dispositif de distribution de paille pour une moissonneuse-batteuse selon au moins l'une quelconque des revendications 3 et 4,
**caractérisé en ce**
**que** la position de chacune des tôles conductrices (20 - 22 ; 23 - 25) d'un paquet de tôle conductrices (33, 34) ou toutes les tôles conductrices (20 - 22 ; 23 - 25) d'un paquet de tôles conductrices (33, 34) peuvent être ajustées en commun par rapport au capot défaillant (14).

6. Dispositif de distribution de paille pour une moissonneuse-batteuse selon l'une quelconque des revendications précédentes,
**caractérisé en ce**
**que** chacune des souffleries de décharge (19) est enveloppée au moins en partie d'une tôle conductrice (20, 23) extérieure.

7. Dispositif de distribution de paille pour une moissonneuse-batteuse selon la revendication 6, **caractérisé en ce**
**que** chacune des tôles conductrices extérieures (20, 23) est réalisée au moins en deux parties, sachant qu'un premier segment (36) de chaque tôle conductrice extérieure (20, 23) est fixé au niveau du capot d'éjection (14), tandis qu'un deuxième segment (37) disposé côté distribution des tôles conductrices extérieures (20, 23) est couplé de manière à pouvoir se déplacer par pivotement au premier segment (36) respectif.

8. Dispositif de distribution de paille pour une moissonneuse-batteuse selon l'une quelconque des revendications précédentes,
**caractérisé en ce**
**que** les éléments de convoyage (42) de chaque soufflerie de décharge (19) sont configurés sous la forme de pointes.

9. Dispositif de distribution de paille pour une moissonneuse-batteuse selon l'une quelconque des revendications précédentes,
**caractérisé en ce**
**que** les souffleries de décharge (19) sont entraînées par des entraînements séparés ou au moyen d'un entraînement commun, et en ce que le ou les entraînements sont configurés sous la forme d'entraînement à courroie trapézoïdale, d'entraînement à étages à roues coniques (47) ou d'un entraînement hydraulique.

10. Dispositif de distribution de paille pour une moissonneuse-batteuse selon la revendication 8,
**caractérisé en ce**
**que** chacune des pointes (43) est couplée au rotor respectif (41) au moyen d'un assemblage par vissage, et en ce que chacun des assemblages par vissage (44) comporte un recouvrement (45).
